# EUROPEAN PATENT SPECIFICATION

(11) **EP 3 322 079 B1**
(45) Date of publication and mention of the grant of the patent: **05.02.2020**
(21) Application number: 17200937.5
(22) Date of filing: 09.11.2017
(51) Int. Cl.: H02M 5/293, H05B 39/04, H02M 7/217, H02M 1/00

(54) **CONNECTIVITY DETECTOR FOR DIMMER**
KONNEKTIVITÄTSDETEKTOR FÜR EINEN DIMMER
DÉTECTEUR DE CONNECTIVITÉ POUR VARIATEUR

(30) Priority: 09.11.2016 BE 201605843
(43) Date of publication of application: 16.05.2018
(73) Proprietor: Niko NV, 9100 Sint-Niklaas (BE)
(72) Inventor: DE BRABANDER, Peter, 9100 Nieuwkerken-Waas (BE)
(74) Representative: DenK iP

(56) References cited:
- CN-A- 101 261 301
- US-A1- 2008 094 010
- US-A1- 2012 230 073
- US-B2- 8 547 035

## Description

### Field of the invention

The present invention relates to the field of electrical dimmers. More specifically, it relates to the field of dimmers which can be connected in 2-wire mode or in 3-wire mode and which can auto-detect in which mode they are connected.

### Background of the invention

Prior art dimmers can be connected in 2-wire mode or in 3-wire mode. In 2-wire mode, the neutral terminal of the dimmer is not connected with the neutral wire of an AC voltage source. In 3-wire mode the neutral terminal of the dimmer is connected with the neutral wire of the AC voltage source.

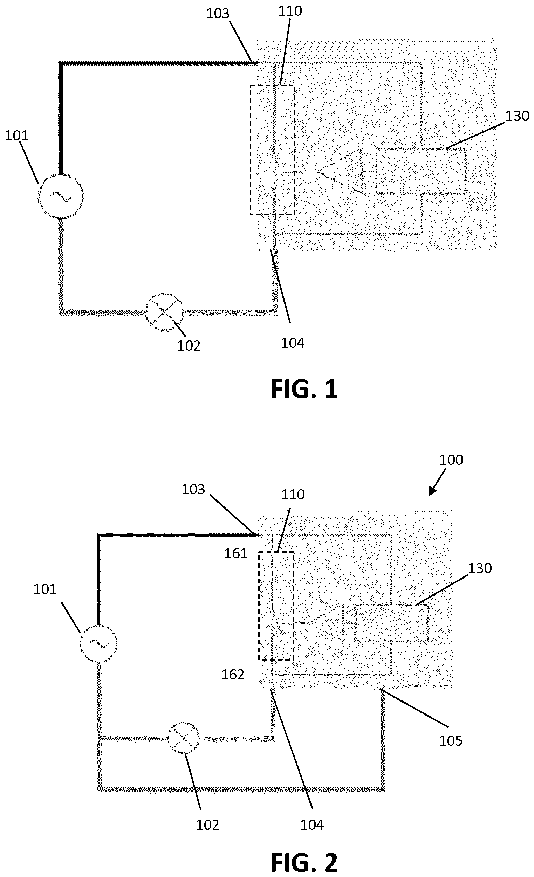

An example of a dimmer connected in 2-wire mode is illustrated in FIG. 1. The dimmer 110 is schematically represented and comprises a switch unit 110 and electronics 130 for controlling the switch unit 110. The switch unit 110 is connected with its line terminal 103 (also referred to as hot terminal) to an AC voltage source 101. The AC voltage source 101 is connected with its neutral to a load 102 and the load 102 is connected with the switched line terminal 104 (also referred to as the switched hot terminal or regulated line) to the switch unit 110 of the dimmer 100.

An example of a two-wire dimmer for controlling the amount of power delivered from an AC power source to an electrical load is disclosed in US20120230073.

An example of a dimmer 100 connected in 3-wire mode is illustrated in FIG. 2. In addition to the connections illustrated in FIG. 1, the neutral of the AC voltage source 101 is connected to the neutral terminal 105 of the dimmer 100.

In addition, dimmers may have an additional terminal being the wire extension terminal. Through this extension terminal, for example, push button control of the dimmer may be enabled. Some suppliers offer dimmers which are able to operate both in 2-wire and in 3-wire configuration. Often these dimmers can detect automatically in which mode they are configured, and typically additional 2-wire/3-wire detection circuitry has been implemented.

US2012/230073 A1 relates to the field of dimmer switches for controlling the amount of power delivered from an AC power source to an electrical load. US2012/230073 A1 specifically focuses on dimmers connected in 2-wire mode and has no means for auto-detecting in which mode it is connected.

CN101261301 is in the field of locomotive cars and proposes a way to detect a grounding fault by the insulation resistance between + and - busbars and the ground and it tries to detect the fault of a broken line.

US8547035 B2 relates to a dimmer which can operate in a two-wire configuration by drawing power through a load when a control circuit is not conducting or in a three-wire configuration, when the AC power neutral terminal is connected, by drawing power from AC power hot and AC power neutral terminals. US8547035 B2 has no means for auto-detecting in which mode it is connected.

US2008/094010 a discloses a dimmer switch for controlling the amount of power delivered from a power source to a lighting load. The dimmer switch in US2008/094010 can switch its mode of operation between two wire mode and three wire mode.

None of the cited prior art documents are disclosing a dimmer which is adapted for determining whether it is connected with the AC power source in 2-wire or in 3-wire mode. Depending on the configuration other dimmer parameters may be preferable. There is therefore a need for dimmers which can determined whether they are connected in 2-wire or in 3-wire mode.

### Summary of the invention

It is an objective of embodiments of the present invention to provide a dimmer comprising a good connectivity detector for detecting whether the dimmer is connected in 2-wire or in 3-wire mode with an AC voltage source.

The above objective is accomplished by a method and device according to the present invention.In a first aspect, embodiments of the present invention relate to a dimmer for being coupled to an AC power source and a load. The dimmer comprises:
- a switch unit comprising a first switch and a second switch coupled in series, with a node between the first switch and the second switch coupled to signal ground;
- a line terminal for electrically coupling the first switch to a first terminal of the AC power source;
- a switched line terminal for electrically coupling the second switch to a first terminal of the load;
- a second resistive element coupled in a path going from the switched line terminal over the second switch to the signal ground, and/or a first resistive element coupled in a path going from the line terminal over the first switch to the signal ground. The dimmer moreover comprises a connectivity detector adapted for obtaining a signal from the first resistive element and/or a signal from the second resistive element and for determining, based on the obtained signals, whether the dimmer is connected with the AC power source in 2-wire or in 3-wire mode.

In embodiments of the present invention, the signals from the resistive elements may for example be voltages over the resistive elements. The signals may be indicative for the current flowing through the resistive element. It is an advantage of embodiments of the present invention that the dimmer itself can determine whether it is connected in 2-wire or 3-wire mode. For such dimmers it is not required that the installer changes a switch to indicate whether the dimmer is connected in 2-wire mode or in 3-wire mode. It is an advantage of embodiments of the present invention that a resistive element, for example a resistor, which is simple and cheap to implement, can be used for determining whether the dimmer is connected in 2-wire mode or in 3-wire mode. It is an advantage of embodiments of the present invention that the connectivity detector is adapted for obtaining the voltage over the resistive element, which is a simple, cheap and well-controlled process, and for automatically determining, based on this voltage, whether the dimmer is connected in 2-wire or in 3-wire mode. Based on this information the dimmer may decide how much power is available to the load. In embodiments of the present invention resistors which are already commonly used for error handling like short circuit detection may be re-used as first and/or second resistive element. For example by re-dimensioning an already available signal in the dimmer it is possible to detect whether the dimmer is connected in 2-wire or 3-wire mode.

It is an advantage of embodiments of the present invention that, by the presence of the first and/or the second resistive element, the switches of the dimmer can be protected against overcurrents. It is an advantage of embodiments of the present invention that components which are typically already present in a prior art phase-cut dimmer, for example as part of a current protection circuit, can be used for determining whether the dimmer is connected in 2-wire mode or in 3-wire mode. The first and/or second resistive element can be resistors which are typically already present in prior art dimmers.

In embodiments of the present invention, the dimmer comprises a neutral terminal for electrically coupling the dimmer to the neutral of the AC power source.

In embodiments of the present invention, the first switch and the second switch are semi-conductor switches which are anti-serially coupled.

In embodiments of the present invention, the first switch and the second switch are MOSFETs.

In embodiments of the present invention, the connectivity detector is adapted for measuring the signal from the first resistive element and from the second resistive element, and for determining, based on the obtained signals, whether the dimmer is connected in 2-wire mode or in 3-wire mode.

It is an advantage of embodiments of the present invention that noise signals which are common to the signal of the first resistive element (e.g. the voltage over the first resistive element) and the signal of the second resistive element (e.g. the voltage over the second resistive element) can be eliminated by obtaining both signals and comparing them. This allows to more accurately determine whether the dimmer is connected in 2-wire mode or in 3-wire mode.

In embodiments of the present invention, the connectivity detector comprises at least one comparator adapted for comparing the obtained signal of the first resistive element and/or the obtained signal of the second resistive element with at least one pre-defined value and/or with regard to each other to determine whether the dimmer is connected in 2-wire or in 3-wire mode.

It is an advantage of embodiments of the present invention that one or more comparators are sufficient to determine whether the dimmer is connected in 2-wire or in 3-wire mode. In embodiments of the present invention the one or more amplifiers may be added for pre-conditioning the obtained signals.

In embodiments of the present invention, the dimmer comprises a microcontroller, wherein the connectivity detector is implemented in the microcontroller.

It is an advantage of embodiments of the present invention that a microcontroller can be used for implementing the functionality of the connectivity detector.

In embodiments of the present invention, the dimmer comprises a computer readable medium having stored thereon a computer-executable program for determining whether the dimmer is connected in 2-wire mode or in 3-wire mode. The computer program comprises program code means for determining whether the dimmer is connected in 2-wire mode or in 3-wire mode based at least on the signal from the first resistive element and/or the signal from the second resistivity element, when the computer program is run on the microcontroller.

The program code means may be adapted for determining whether the dimmer is connected in 2-wire mode or in 3-wire mode, based on the signal from the first resistive element or the second resistivity element solely. Alternatively, the program code means may be adapted for determining whether the dimmer is connected in 2-wire mode or in 3-wire mode based on the signal from the first resistive element and the signal from the second resistive element.

In a second aspect, embodiments of the present invention relate to a method for detecting whether a dimmer is connected to an AC power source in 2-wire or 3-wire mode. The dimmer comprises a switch unit comprising a first switch and a second switch coupled in series, with a node between the first switch and the second switch being coupled to signal ground, and a second resistive element coupled in a path going from the load over the second switch to the signal ground, and/or a first resistive element coupled in a path going from the AC power source over the first switch to the signal ground. The method comprises:
- a first step of obtaining a signal from the first resistive element and/or from the second resistive element, and
- a second step for determining, based on the obtained signals, whether the dimmer is connected in 2-wire or in 3-wire mode with the AC power source.

It is an advantage of a method according to embodiments of the present invention that by obtaining the from the first and/or second resistive element, which are typically already present in a prior art dimmer, the method can determine whether the dimmer is connected in 2-wire or in 3-wire mode.

In embodiments of the present invention, the second step comprises comparing the obtained signal from the first resistive element and/or from the second resistive element with one or more pre-defined values.

These and other aspects of the invention will be apparent from and elucidated with reference to the embodiment(s) described hereinafter.

### Brief description of the drawings

FIG. 1 shows a schematic overview of a dimmer connected in 2-wire mode.
FIG. 2 shows a schematic overview of a dimmer connected in 3-wire mode.
FIG.3 shows a schematic overview of a dimmer, in accordance with embodiments of the present invention, which is connected in 2-wire mode or in 3-wire mode (the dotted line represents 3-wire mode).

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, embodiments of the present invention relate to a dimmer which comprises a connectivity detector wherein the connectivity detector is adapted to determine whether the dimmer is connected with an AC voltage source in 2-wire mode or in 3-wire mode.

The dimmer comprises a line terminal, a switched line terminal, a neutral terminal adapted to be connected with the neutral of the AC voltage source, a switch unit comprising a first and a second semi-conductor switch which are anti-serially coupled. The switches may be MOSFET switches, they may also be IGBT with a parallel diode, or they may be bipolar transistor with a parallel diode per transistor. In between the first and second semi-conductor switch a serial connection of a first and second resistive element, e.g. resistor, is present. In embodiments of the present invention a short-circuit may be present instead of the first resistor.

The node connecting the first and the second resistor, or the short and the second resistor, is connected to the signal ground. The first resistor, if present, is connected with the first semi-conductor switch which is connected with the line terminal and the second resistor is connected with the second semi-conductor switch which is connected with the switched line terminal.

In embodiments of the present invention the connectivity detector is adapted for measuring the voltage over the second resistor and for determining, based on the measured voltage, whether the dimmer is connected in 2-wire or in 3-wire mode.

In both modes the AC power source 101 and the load 102 are connected in series between the line terminal 303 and the switched line terminal 304 of the dimmer 300. In 3-wire mode, moreover, the interconnection between the AC power source 101 and the load 102 is connected with the neutral terminal 305 of the dimmer 300. In 3-wire mode the dimmer's own power will not flow through the load anymore but through a direct path: line terminal - dimmer - neutral terminal.

In embodiments of the present invention the AC voltage source 101 (e.g. 90VAC-253VAC) has a line terminal and a neutral terminal.

In 2-wire mode the line terminal of the AC voltage source 101 may for example be connected to the line terminal 303 of the dimmer and the switched line terminal 304 of the dimmer may be connected to the load 102 and from the load a connection may be made to the neutral terminal of the AC voltage source.

In another configuration the line terminal of the AC voltage source may be connected to the load 102, the load 102 may be connected to switched line terminal 304 of the dimmer, and the neutral terminal of the AC voltage source may be connected to the line terminal 303 of the dimmer.

Also in 3-wire mode there may be a similar switch between the line terminal and the neutral terminal of the AC voltage source. In both cases the interconnection between the AC voltage source 101 and the load 102 is connected with the neutral terminal 305 of the dimmer 300. In one configuration the AC voltage source is connected with its line terminal to the line terminal 303 of the dimmer and with its neutral terminal to the load. In another possible configuration the AC voltage source is connected with its neutral terminal to the line terminal 303 of the dimmer and with its line terminal to the load. In these examples the load is connected to the switched line terminal 304 of the dimmer.

In the previous examples the AC-voltage source and the load are connected in series between the line terminal and the switched line terminal of the dimmer with the AC-voltage source connected with the line terminal of the dimmer and the load connected with the switched line terminal of the dimmer. In other exemplary embodiments of the present invention the AC-voltage source and the load are connected in series between the line terminal and the switched line terminal of the dimmer with the AC-voltage source connected with the switched line terminal of the dimmer and the load connected with the line terminal of the dimmer. In 3-wire mode the latter configuration is less preferable because in this configuration the power required for powering the dimmer will result in a current through the load which is not the purpose in a 3-wire configuration.

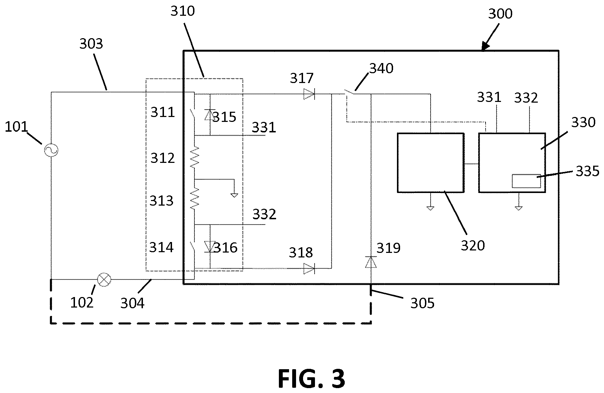

FIG. 3 shows a schematic overview of a dimmer 300 in accordance with embodiments of the present invention. The dimmer comprises a switch unit 310, a power supply 320, dimmer electronics 330, and a connectivity detector 335.

The dimmer 300 can be connected with an AC voltage source 101 and with a load 102 by means of the line terminal 303, the switched line terminal 304, and the neutral terminal 305.

The switch unit 310 is connected between the line terminal 303 and the switched line terminal 304. The switch unit 310 comprises a first and a second semiconductor switch. The first semiconductor switch (311, 315) and the second semiconductor switch (314, 316) are anti-serially coupled. In between the first and second semiconductor switch a serial connection of a first sense resistor 312, optionally present, and a second sense resistor 313 is present. In embodiments of the present invention other types of sense elements, such as a current sense transformer, may be used instead of the sense resistors.

In the example illustrated in FIG. 3, the line terminal 303 of the dimmer 300 is connected to the anode of a first diode 317. The switched line terminal 304 of the dimmer 300 is connected to the anode of a second diode 318. The cathodes of the first and second diodes 317, 318 may be directly connected to the power supply 320 or a switch 340 may be present in between both. The functionality of the switch is described later in the description.

In the example illustrated in FIG. 3 the switch unit 310 comprises a series connection of a first switch 311, an optional first sense resistor 312, a second sense resistor 313, and a second switch 314. A third diode 315 is connected with its anode to the interconnection of the first switch 311 and the first sense resistor 312 and with its cathode to the line terminal 303. A fourth diode 316 is connected with its anode to the interconnection of the second switch 314 and the second sense resistor 313 and with its cathode to the switched line terminal 304. The connection between the first and second sense resistor 312, 313 is connected to signal ground. The third diode 315 may be integrated in the first switch 311. This is for example the case when using MOSFETs as switch elements. Also the fourth diode 316 may be integrated in the second switch 314.

In the example illustrated in FIG. 3, further a fifth diode 319 is provided, the anode of which is connected with the neutral terminal 305 and the cathode of which is connected with a signal terminal of the power supply 320, the other terminal of which is connected to signal ground. Thereby the first and second diode 317, 318 and the fifth diode 319 have an or-ing function. The fifth diode 319 is required to prevent a short between line and neutral when neutral is connected. Without fifth diode 319 the short circuit path goes from line 303 to diode 317 to neutral 305. This power supply provides DC power to the dimmer electronics 330. In the example illustrated, the voltage over the first sense resistor 312 and the voltage over the second sense resistor 313 are used as a first input 331 and a second input 332, respectively, of the dimmer electronics 330. In embodiments of the present invention the dimmer 300 comprises a connectivity detector 335, which may be part of the dimmer electronics 335, and which is adapted for determining, based at least on the voltage over the second sense resistor 313, and optionally on the voltages of the first and second sense resistors 312, 313, whether the dimmer 300 is connected in 2-wire mode or in 3-wire mode - see below. In the example of FIG.3 the connectivity detector 335 is part of the dimmer electronics 330. The voltages over the first and second resistor may be pre-amplified before they are used as inputs for the connectivity detector 335.

The dimmer 300 may be connected in 2-wire mode. In that case the line terminal 303 is connected with the AC voltage source 101 which is connected with the load 102 which is connected with the switched line terminal 304. In that case the neutral terminal 305 is not connected.

The dimmer 300 may also be connected in 3-wire mode. The third wire is illustrated by the dashed line in FIG. 3. This wire interconnects the neutral terminal 305 with the neutral of the AC voltage source 101.

In embodiments of the present invention the connectivity detector 335 is adapted for determining, based on the voltage over the second sense resistor 313 or based on the voltage over the first sense resistor 312 and the second sense resistor 313, whether the dimmer is connected in 2-wire mode or in 3-wire mode. This is possible because of the difference in current paths when the power supply 320 is drawing power, depending on whether a 2-wire mode or 3-wire mode is implemented.

When the dimmer 300 is connected in 2-wire mode, the neutral terminal 305 is not connected with the neutral of the AC voltage source 101 (the dashed line in FIG. 3 is not present). So when the switches 311, 314 are open, the dimmer 300 draws its power from the AC voltage source via the load 302. In this case the following current paths are used:
a) AC voltage source 101 - line terminal 303 - first diode 317 - power supply 320 - signal ground - second sense resistor 313 - fourth diode 316 - load 102 - neutral - AC voltage source 101
b) AC voltage source 101 - neutral - load 102 - second diode 318 - power supply 320 - signal ground - first sense resistor 312 - third diode 315 - line terminal 303 - AC voltage source 101. In 2-wire mode there is full bridge rectification and thus 2 current paths are present.

When the dimmer 300 is connected in 3-wire configuration, the neutral of the AC voltage source 101 is connected to the neutral terminal 305 (the dashed line in FIG. 3 is present). In that case the dimmer 300 does not draw its power from the AC voltage source via the load 302 but via the following current path:
AC voltage source 101 - neutral - fifth diode 319 - power supply 320 - signal ground-first sense resistor 312 - third diode 315 - line terminal 303 - AC voltage source 101. In 3-wire mode there is half bridge rectification and thus only one current path is present.

When measuring and comparing the voltage over the first sense resistor 312 and over the second sense resistor 313 it is possible to determine whether the dimmer is connected in 2-wire or in 3-wire mode. In 2-wire mode the current drawn by the power supply 320 is flowing through the first sense resistor 312 as well as through the second sense resistor 313. In 3-wire mode the current drawn by the power supply 320 is only flowing through the first sense resistor 312. Hence in the 3-wire mode a voltage, caused by the current drawing by the power supply, is only present over the first current sensor 312 and not over the second current sensor 313 when the load 102 (e.g. the lamp) is turned off.

Thus, by comparing the voltage over the second sense resistor 313 with a pre-defined value it can be determined if the dimmer is connected in 2-wire or in 3-wire mode. For example, if the voltage over the second sense resistor 313 remains below 100 µV the connectivity detector may decide that the dimmer is connected in 3-wire mode. In embodiments of the present invention the detection between 2-wire and 3-wire mode may be done once. This may for example be done at initial start-up (e.g. when the mains is turned on). In embodiments of the present invention, during the diagnostic phase the lamp is switched off. It is an advantage of embodiments of the present invention that before turning on the lamp the dimmer knows whether it is connected in 2-wire mode or 3-wire mode because depending on the mode it might be advantageous to use other dimmer parameters. For example the parameters for the synchronization may differ between 2-wire mode and 3-wire mode.

In embodiments of the present invention the voltages over the first and second sense resistors 312, 313 may be amplified and conditioned before they are analysed by the connectivity detector 335. Therefore the pre-defined value is dependent on this amplification and conditioning. The values of the first and second sense resistor 312, 313 depend on power rating of the dimmer as these resistors are also used for detection of overload and short circuit. In exemplary embodiments of the present invention these values may be: 0R050 -0R068 - 0R510.

In prior art dimmers the first sense resistor 312 and the second sense resistor 313 are often already present for detecting overcurrent using a current protection circuit. Using such a circuit the dimmer can for example be protected against short circuit. It is an advantage of embodiments of the present invention that these first and second sense resistors, which are already present for other reasons, can also be used for discriminating between whether the dimmer is connected in 2-wire or in 3-wire mode.

In embodiments of the present invention it is sufficient to measure only the voltage over the second sense resistor 313. As such it is sufficient that only the second resistor 313 is present and it is possible to the first resistor 312 is replaced by a short-circuit.

In other embodiments of the present invention it is sufficient to measure only the voltage over the first sense resistor 312. In that case the second sense resistor 313 may be replaced by a short. Measuring over the second sense resistor is, however, more efficient as no power will be dissipated over one of the sense resistors in 3-wire mode.

It may however be advantageous to measure the voltage over both the first and the second sense resistors 312, 313. By measuring both voltages, noise signals which are common to both voltages can be eliminated by the connectivity detector 335. Such noise signals may be generated by other components in the dimmer 300, such as the synchronisation circuit. Thus the connectivity detector can more accurately define the power over the first sense resistor and the power over the second sense resistor. Thus a more accurate determination of how the dimmer is connected (2-wire or 3-wire mode) is possible.

In embodiments of the present invention the connectivity detector 335 may be a functional block in a microcontroller wherein the microcontroller is adapted for obtaining the voltage over the second resistor 313 or the voltage over the first resistor 312 and the voltage over the second resistor 313. The functional block is thereby adapted for determining whether the dimmer is connected in 2-wire mode or in 3-wire mode. This may be based on the voltage over the second resistor, or it may be based on the voltage over the second resistor and the voltage over the first resistor.

In embodiments of the present invention the microcontroller may be running a program which it retrieved from a computer readable medium on which the program is stored. The program comprises program code means for determining whether the dimmer 300 is connected in 2-wire mode or in 3-wire mode based on the voltage over the second resistor, or based on the voltage over the second resistor and the voltage over the first resistor.

In embodiments of the present invention, a switch 340 may be added between the cathodes of the first and second diode 317, 318 and the cathode of the fifth diode 319. As parameters may differ (e.g. with regard to synchronization when the dimmer is in 2-wire or 3-wire mode), when the detection has been done, this switch may be closed when the dimmer is connected in 2-wire mode or opened when the dimmer is connected in 3-wire mode. The connectivity detector 335 may provide the control signal towards the switch 340. The switch may for example be a mosfet, a bipolar transistor, IGBT, or a relay.

In a second aspect, embodiments of the present invention relate to a method for detecting whether a dimmer is connected in 2-wire or in 3-wire mode with an AC voltage source and a load.

The dimmer is a dimmer comprising a first and a second semi-conductor switch which are anti-serially coupled, with in between the first and second semi-conductor switch a serial connection of a first resistor or a short and a second resistor, as described in more detail with reference to the first aspect of the present invention.

A first step of the method comprises measuring the voltage over the second resistor. In embodiments of the present invention the first step also comprises measuring the voltage over the first resistor. These voltages may be amplified and/or conditioned before they are subjected to the second step.
In the second step, it is determined whether the dimmer is connected in 2-wire or in 3-wire mode. This determination is done based on the obtained voltages. This may be done by comparing the obtained voltage over at least the second resistor with a predetermined value.

## Claims

1. A dimmer (300) connectable to an AC power source (101) in a 2-wire mode or in a 3-wire mode, the dimmer being further connectable to a load (102), the AC power source (101) comprising a first terminal, a second terminal and a neutral, the dimmer (300) comprising:
- a switch unit (310) comprising a first switch (311) and a second switch (314) coupled in series, with a node between the first switch (311) and the second switch (314) coupled to signal ground;
- a line terminal (303) for electrically coupling the first switch (311) to the first terminal of the AC power source (101);
- a switched line terminal (304) for electrically coupling the second switch (314) to a first terminal of the load (102), wherein a second terminal of the load (102) is connectable to the second terminal of the AC power source (101);
- a second resistive element (313) coupled in series in a path going from the switched line terminal (304) over the second switch (314) to the signal ground, and/or a first resistive element (312) coupled in series in a path going from the line terminal (303) over the first switch (311) to the signal ground;
**characterized in that**:
- the dimmer (300) further comprises a neutral terminal (305) for electrically coupling the dimmer (300) to the neutral of the AC power source (101) in the 3-wire mode, wherein in the 3-wire mode: i) the second terminal of the load is further connectable to the neutral of the AC power source (101) and ii) the AC power source (101) is connectable between the line terminal (303) and the neutral terminal (305), such that, in operation, power for the dimmer (300) flows through a direct path between the line terminal (303) and the neutral terminal (305);
- the dimmer (300) further comprising a connectivity detector (335) adapted for obtaining a signal from the second resistive element (313) and/or a signal from the first resistive element (312) and for determining, based on the obtained signals, whether the dimmer (300) is connected to the AC power source (101) in the 2-wire or in the 3-wire mode, wherein the connectivity detector (335) comprises at least one comparator adapted for comparing the obtained signal of the first resistive element and/or the obtained signal of the second resistive element with at least one pre-defined value and/or with regard to each other to determine whether the dimmer (300) is connected in 2-wire or in 3-wire mode.

2. The dimmer (300) according to any of the previous claims, wherein the first switch (311) and the second switch (314) are semi-conductor switches which are anti-serially coupled.

3. The dimmer (300) according to claim 2, wherein the first switch (311) and the second switch (314) are MOSFETs.

4. The dimmer (300) according to any of the previous claims, wherein the connectivity detector (335) is adapted for measuring the signal from the second resistive element (313) and from the first resistive element (312), and for determining, based on the comparison between the measured signals, whether the dimmer (300) is connected in 2-wire mode or in 3-wire mode.

5. The dimmer (300) according to any of the previous claims, comprising a microcontroller, wherein the connectivity detector (335) is implemented in the microcontroller.

6. The dimmer (300) according to claim 5, comprising a computer readable medium having stored thereon a computer-executable program for determining whether the dimmer (300) is connected in 2-wire mode or in 3-wire mode, the computer program comprising program code means for determining whether the dimmer is connected in 2-wire mode or in 3-wire mode based at least on the signal from the second resistive element (313) and/or the signal from the first resistivity element (312), when the computer program is run on the microcontroller.

7. A method for detecting whether a dimmer (300) is connected to an AC power source (101) in a 2-wire mode or in a 3-wire mode, the dimmer (300) comprising a switch unit (310) comprising a first switch (311) and a second switch (314) coupled in series, with a node between the first switch (311) and the second switch (314) being coupled to signal ground, and a second resistive element (313) coupled in series in a path going from a switched line terminal (304) of the dimmer over the second switch (314) to the signal ground, and/or a first resistive element (312) coupled in series in a path going from a line terminal (303) of the dimmer over the first switch (311) to the signal ground wherein the AC power source is connected in 3-wire mode when it is connected to a neutral terminal (305) of the dimmer such that, in operation, the power for the dimmer (300) flows through a direct path between the line terminal (303) and the neutral terminal (305)
**characterized in that** the method comprises:
- a first step of obtaining a signal from the second resistive element (313) and/or from the first resistive element (312), and
- a second step for determining, based on the obtained signals, whether the dimmer (300) is connected in 2-wire or in 3-wire mode with the AC power source (101) wherein the second step comprises comparing the obtained signal of the first resistive element and/or the obtained signal of the second resistive element with at least one pre-defined value and/or with regard to each other to determine whether the dimmer (300) is connected in 2-wire or in 3-wire mode..

## Patentansprüche

1. Dimmer (300), der mit einer Wechselstromquelle (101) in einem 2-Drahtmodus oder in einem 3-Drahtmodus verbunden werden kann, wobei der Dimmer ferner mit einem Verbraucher (102) verbunden werden kann, wobei die Wechselstromquelle (101) einen ersten Anschluss, einen zweiten Anschluss und einen Sternpunkt umfasst, wobei der Dimmer (300) umfasst:
- eine Schaltereinheit (310), die einen ersten Schalter (311) und einen zweiten Schalter (314) umfasst, die in Reihe geschaltet sind, wobei ein Knoten zwischen dem ersten Schalter (311) und dem zweiten Schalter (314) mit Signalerde verbunden ist;
- einen Leitungsanschluss (303) zum elektrischen Koppeln des ersten Schalters (311) an den ersten Anschluss der Wechselstromquelle (101);
- einen geschalteten Leitungsanschluss (304) zum elektrischen Koppeln des zweiten Schalters (314) an einen ersten Anschluss des Verbrauchers (102), wobei ein zweiter Anschluss des Verbrauchers (102) mit dem zweiten Anschluss der Wechselstromquelle (101) verbindbar ist;
- ein zweites Widerstandselement (313), das in einem Pfad in Reihe geschaltet ist, der von dem geschalteten Leitungsanschluss (304) über den zweiten Schalter (314) zu der Signalerde führt, und/oder ein erstes Widerstandselement (312), das in einem Pfad in Reihe geschaltet ist, der von dem Leitungsanschluss (303) über den ersten Schalter (311) zu der Signalerde führt;
**dadurch gekennzeichnet, dass**:
- der Dimmer (300) ferner einen Sternpunktanschluss (305) zum elektrischen Koppeln des Dimmers (300) an den Sternpunkt der Wechselstromquelle (101) in dem 3-Drahtmodus umfasst, wobei in dem 3-Drahtmodus: i) der zweite Anschluss des Verbrauchers ferner mit dem Sternpunkt der Wechselstromquelle (101) verbunden werden kann und ii) die Wechselstromquelle (101) zwischen dem Leitungsanschluss (303) und dem Sternpunktanschluss (305) derart verbunden werden kann, dass der Strom für den Dimmer (300) im Betrieb durch einen direkten Pfad zwischen dem Leitungsanschluss (303) und dem Sternpunktanschluss (305) fließt;
- der Dimmer (300) ferner einen Konnektivitätsdetektor (335) umfasst, der angepasst ist, um ein Signal von dem zweiten Widerstandselement (313) und/oder ein Signal von dem ersten Widerstandselement (312) zu erhalten und basierend auf den erhaltenen Signalen zu bestimmen, ob der Dimmer (300) mit der Wechselstromquelle (101) in dem 2-Draht- oder in dem 3-Drahtmodus verbunden ist, wobei der Konnektivitätsdetektor (335) wenigstens einen Komparator umfasst, der angepasst ist, um das erhaltenen Signal des ersten Widerstandselements und/oder das erhaltene Signal des zweiten Widerstandselements mit wenigstens einem vorgegebenen Wert und/oder in Bezug aufeinander zu bestimmen, ob der Dimmer (300) in dem 2-Draht- oder in dem 3-Drahtmodus verbunden ist.

2. Dimmer (300) nach einem der vorhergehenden Ansprüche, wobei der erste Schalter (311) und der zweite Schalter (314) Halbleiterschalter sind, die antibitseriell gekoppelt sind.

3. Dimmer (300) nach Anspruch 2, wobei der erste Schalter (311) und der zweite Schalter (314) MOSFETs sind.

4. Dimmer (300) nach einem der vorhergehenden Ansprüche, wobei der Konnektivitätsdetektor (335) angepasst ist, um das Signal von dem zweiten Widerstandselement (313) und von dem ersten Widerstandselement (312) zu messen und basierend auf dem Vergleich zwischen den gemessenen Signalen zu bestimmen, ob der Dimmer (300) in dem 2-Drahtmodus oder in dem 3-Drahtmodus verbunden ist.

5. Dimmer (300) nach einem der vorhergehenden Ansprüche, der einen Microcontroller umfasst, wobei der Konnektivitätsdetektor (335) in dem Microcontroller implementiert ist.

6. Dimmer (300) nach Anspruch 5, der ein computerlesbares Medium mit einem darauf gespeicherten computerausführbaren Programm zum Bestimmen umfasst, ob der Dimmer (300) in dem 2-Drahtmodus oder in dem 3-Drahtmodus verbunden ist, wobei das Computerprogramm Programmcodemittel zum Bestimmen wenigstens basierend auf dem Signal von dem zweiten Widerstandselement (313) und/oder dem Signal von dem ersten Widerstandselement (312) umfasst, ob der Dimmer in dem 2-Drahtmodus oder in dem 3-Drahtmodus verbunden ist, wenn das Computerprogramm auf dem Mikrocontroller ausgeführt wird.

7. Verfahren zum Erfassen, ob ein Dimmer (300) mit einer Wechselstromquelle (101) in einem 2-Drahtmodus oder in einem 3-Drahtmodus verbunden ist, wobei der Dimmer (300) eine Schaltereinheit (310) umfasst, die einen ersten Schalter (311) und einen zweiten Schalter (314), die in Reihe geschaltet sind, mit einem Knoten zwischen dem ersten Schalter (311) und dem zweiten Schalter (314), der mit der Signalerde verbunden ist, und ein zweites Widerstandselement (313), das in einem Weg in Reihe geschaltet ist, der von einem geschalteter Leitungsanschluss (304) des Dimmers über den zweiten Schalter (314) zu der Signalerde führt, und/oder ein erstes Widerstandselement (312) umfasst, das in einem Pfad in Reihe geschaltet ist, der von einem Leitungsanschluss (303) des Dimmers über den ersten Schalter (311) zu der Signalerde führt, wobei die Wechselstromquelle in dem 3-Drahtmous verbunden ist, wenn sie mit einem Sternpunktanschluss (305) des Dimmers derart verbunden ist, dass der Strom für den Dimmer (300) im Betrieb durch einen direkten Pfad zwischen dem Leitungsanschluss (303) und dem Sternpunktanschluss (305) fließt,
**dadurch gekennzeichnet, dass** das Verfahren Folgendes umfasst:
- einen ersten Schritt zum Erhalten eines Signals von dem zweiten Widerstandselement (313) und/oder von dem ersten Widerstandselement (312), und
- einen zweiten Schritt zum Bestimmen, basierend auf den erhaltenen Signalen, ob der Dimmer (300) in dem 2-Drahtmodus oder in dem 3-Drahtmodus mit der Wechselstromquelle (101) verbunden ist, wobei der zweite Schritt das Vergleichen des erhaltenen Signals des ersten Widerstandselements und/oder des erhaltenen Signals des zweiten Widerstandselements mit wenigstens einem vorgegebenen Wert und/oder in Bezug aufeinander umfasst, um zu bestimmen, ob der Dimmer (300) in dem 2-Drahtmodus oder in dem 3-Drahtmodus verbunden ist.

## Revendications

1. Gradateur (300) pouvant être connecté à une source de courant alternatif (101) en mode 2 fils ou en mode 3 fils, le gradateur pouvant en outre être connecté à une charge (102), la source de courant alternatif (101) comprenant une première borne, une seconde borne et un conducteur neutre, le gradateur (300) comprenant :
- une unité de commutation (310) comprenant un premier commutateur (311) et un second commutateur (314) couplés en série, avec un nœud entre le premier commutateur (311) et le second commutateur (314) couplé à la masse de signal ;
- une borne de ligne (303) pour coupler électriquement le premier commutateur (311) à la première borne de la source de courant alternatif (101) ;
- une borne de ligne commutée (304) pour coupler électriquement le second commutateur (314) à une première borne de la charge (102), dans laquelle une seconde borne de la charge (102) peut être connectée à la seconde borne de la source de courant alternatif (101) ;
- un second élément résistif (313) couplé en série dans un trajet allant de la borne de ligne commutée (304) par-dessus le second commutateur (314) jusqu'à la masse de signal, et/ou un premier élément résistif (312) couplé en série dans un trajet allant de la borne de ligne (303) par-dessus le premier commutateur (311) jusqu'à la masse de signal ;
**caractérisé en ce que** :
- le gradateur (300) comprend en outre une borne neutre (305) permettant de le coupler électriquement au conducteur neutre de la source de courant alternatif (101) en mode 3 fils, dans lequel, en mode 3 fils : i) la seconde borne de la charge peut en outre être connectée au conducteur neutre de la source de courant alternatif (101), et ii) la source de courant alternatif (101) peut être connectée entre la borne de ligne (303) et la borne neutre (305), de sorte que, en fonctionnement, l'alimentation du gradateur (300) circule par un trajet direct entre la borne de ligne (303) et la borne neutre (305) ;
- le gradateur (300) comprenant en outre un détecteur de connectivité (335) adapté pour obtenir un signal provenant du second élément résistif (313) et/ou un signal provenant du premier élément résistif (312) et pour déterminer, sur la base des signaux obtenus, si le gradateur (300) est connecté à la source de courant alternatif (101) en mode 2 fils ou en mode 3 fils, le détecteur de connectivité (335) comprenant au moins un comparateur adapté pour comparer le signal obtenu du premier élément résistif et/ou le signal obtenu du second élément résistif avec au moins une valeur prédéfinie et/ou l'un par rapport à l'autre, afin de déterminer si le gradateur (300) est connecté en mode 2 fils ou en mode 3 fils.

2. Gradateur (300) selon l'une quelconque des revendications précédentes, dans lequel le premier commutateur (311) et le second commutateur (314) sont des commutateurs à semi-conducteurs qui sont couplés de manière anti-sérielle.

3. Gradateur (300) selon la revendication 2, dans lequel le premier commutateur (311) et le second commutateur (314) sont des transistors à effet de champ MOS.

4. Gradateur (300) selon l'une quelconque des revendications précédentes, dans lequel le détecteur de connectivité (335) est adapté pour mesurer le signal provenant du second élément résistif (313) et du premier élément résistif (312), et pour déterminer, sur la base de la comparaison entre les signaux mesurés, si le gradateur (300) est connecté en mode 2 fils ou en mode 3 fils.

5. Gradateur (300) selon l'une quelconque des revendications précédentes, comprenant un microcontrôleur, le détecteur de connectivité (335) étant mis en œuvre dans le microcontrôleur.

6. Gradateur (300) selon la revendication 5, comprenant un support lisible par ordinateur sur lequel est stocké un programme exécutable par ordinateur, permettant de déterminer si le gradateur (300) est connecté en mode 2 fils ou en mode 3 fils, le programme informatique comprenant des moyens de code de programme permettant de déterminer si le gradateur est connecté en mode 2 fils ou en mode 3 fils au moins sur la base du signal provenant du second élément résistif (313) et/ou du signal du premier élément résistif (312), lorsque le programme informatique est exécuté sur le microcontrôleur.

7. Procédé permettant de détecter si un gradateur (300) est connecté à une source de courant alternatif (101) en mode 2 fils ou en mode 3 fils, le gradateur (300) comprenant une unité de commutation (310) comprenant un premier commutateur (311) et un second commutateur (314) couplés en série, un noeud entre le premier commutateur (311) et le second commutateur (314) étant couplé à la masse de signal, et un second élément résistif (313) couplé en série dans un trajet allant d'une borne de ligne commutée (304) du gradateur par-dessus le second commutateur (314) à la masse de signal, et/ou un premier élément résistif (312) couplé en série dans un trajet allant d'une borne de ligne (303) du gradateur par-dessus le premier commutateur (311) jusqu'à la masse de signal, la source de courant alternatif étant connectée en mode 3 fils lorsqu'elle est connectée à une borne neutre (305) du gradateur, de sorte que, en fonctionnement, l'alimentation du gradateur (300) circule par un trajet direct entre la borne de ligne (303) et la borne neutre (305)
**caractérisé en ce que** le procédé comprend :
- une première étape d'obtention d'un signal provenant du second élément résistif (313) et/ou du premier élément résistif (312), et
- une seconde étape permettant de déterminer, sur la base des signaux obtenus, si le gradateur (300) est connecté en mode 2 fils ou en mode 3 fils à la source de courant alternatif (101), la seconde étape consistant à comparer le signal obtenu du premier élément résistif et/ou le signal obtenu du second élément résistif avec au moins une valeur prédéfinie et/ou l'un par rapport à l'autre, afin de déterminer si le gradateur (300) est connecté en mode 2 fils ou en mode 3 fils.
